# EUROPEAN PATENT APPLICATION

(11) **EP 4 467 888 A1**
(43) Date of publication of application: **27.11.2024**
(21) Application number: 24177745.7
(22) Date of filing: 23.05.2024
(51) Int. Cl.: F24F 11/43, F24F 11/64, F24F 11/65, F24F 110/12, F24F 140/12

(54) **METHOD AND DEVICE FOR CONTROLLING FREEZING PREVENTION DURING REFRIGERATION OF AIR CONDITIONING SYSTEM, AND MEDIUM**

(30) Priority: 23.05.2023 CN 202310590778
(71) Applicant: Guangdong Carrier Heating, Ventilation And Air Conditioning Co., Ltd., Foshan Guangdong 528244 (CN)
(72) Inventor: HE, Changjing, Foshan, Guangdong 528244 (CN); YE, Jianwei, Foshan, Guangdong 528244 (CN)
(74) Representative: Dehns

(57) **Abstract**

The present invention provides a method and device for controlling freezing prevention during refrigeration of an air conditioning system, and a medium. The method includes the following steps: a preset step: presetting a return air parameter compensation quantity according to an outdoor ambient temperature; a detection step: detecting a real-time return air parameter on a low-pressure side of the air conditioning system in a refrigeration mode; a comparison step: calculating a corrected return air parameter according to the sum of the real-time return air parameter and the corresponding return air parameter compensation quantity, and comparing whether the corrected return air parameter is less than a first return air parameter threshold; and a control step: controlling the air conditioning system to enter a freezing prevention protection mode if the corrected return air parameter is less than the first return air parameter threshold. According to the present invention, the accuracy of freezing prevention determination is improved, and the interference by bias flow and the like is avoided; and the start and stop of a compressor (11) can be controlled to realize the freezing prevention protection without the need for the communication between an indoor unit and an outdoor unit.

## Description

### TECHNICAL FIELD

The present invention relates to the field of air conditioners, and in particular to a method and device for controlling freezing prevention during refrigeration of an air conditioning system, and a medium.

### BACKGROUND

An air-conditioning evaporator will have a poor evaporation effect of a refrigerant in the evaporator due to the excessively low ambient temperature or the indoor unit motor failure, or dirty blockage caused by long-term use of the evaporator, so that the evaporator freezes during prolonged operation, or a liquid refrigerant enters a compressor to cause liquid hammer on the compressor. For this situation, the evaporator needs to be protected from being frozen in time.

The existing freezing prevention control logic usually performs freezing prevention protection based on the evaporator temperature. However, the evaporator may have uneven flow distribution, resulting in the reduction of the refrigerant passing through a flow path where an evaporator coil is located, so that the detected temperature of the evaporator coil is not the actual lowest temperature of the evaporator. Therefore, inaccuracies may occur during freezing prevention determination, resulting in the inability to perform freezing prevention protection in time when an indoor unit freezes, and damage to the evaporator structure. In addition, the operation of the air conditioner is controlled by an indoor unit mainboard, which requires communication between the indoor and outdoor units to control the start and stop of an outdoor unit compressor. Thus, the freezing prevention control cannot be achieved for air conditioners of which the indoor and outdoor units do not communicate with each other.

### SUMMARY

In view of the above problems, the present invention provides a method and device for controlling freezing prevention during refrigeration of an air conditioning system, and a medium. A return air parameter compensation quantity is preset according to an outdoor ambient temperature and is compensated to a real-time return air parameter on a low-pressure side of an outdoor unit, and the operation condition of an indoor evaporator can be reflected without the need for the communication between indoor and outdoor units, and accordingly, whether to enter a freezing prevention protection mode is determined, which improves the accuracy of freezing prevention control of the evaporator and ensures the stable operation of the air conditioning system..

According to an aspect of the present invention, there is provided a method for controlling freezing prevention during refrigeration of an air conditioning system, including the following steps:
a preset step: presetting a return air parameter compensation quantity according to an outdoor ambient temperature;
a detection step: detecting a real-time return air parameter on a low-pressure side of the air conditioning system in a refrigeration mode;
a comparison step: calculating a corrected return air parameter according to the sum of the real-time return air parameter and the corresponding return air parameter compensation quantity, and comparing whether the corrected return air parameter is less than a first return air parameter threshold; and
a control step: controlling the air conditioning system to enter a freezing prevention protection mode if the corrected return air parameter is less than the first return air parameter threshold.

The return air parameter compensation quantity is preset according to the outdoor ambient temperature, the corrected return air parameter is obtained according to the detected real-time return air parameter on the low-pressure side and the return air parameter compensation quantity, and whether to enter the freezing prevention protection mode is determined according to the comparison between the corrected return air parameter and the first return air parameter threshold, whereby when the corrected return air parameter is less than the first return air parameter threshold, the evaporator temperature is in a low state with a possibility of freezing, and entering the freezing prevention protection mode at this time can prevent the evaporator from being frozen in time. Furthermore, the return air parameter on a low-pressure side of the refrigeration system is collected, so that the frozen state of the evaporator can be identified more accurately, and interference by bias flow and the like is avoided. Moreover, the low-pressure side of the refrigeration system is located outdoors, and thus the start and stop of the compressor can be controlled to achieve the freezing prevention protection without the need for the communication between the indoor unit and the outdoor unit, thereby saving the cost of the air conditioning system.

Optionally, in the preset step, the outdoor ambient temperature is greater than a first preset temperature and corresponds to a first return air parameter compensation quantity; the outdoor ambient temperature is greater than a second preset temperature and not greater than the first preset temperature, and corresponds to a second return air parameter compensation quantity; and the outdoor ambient temperature is not greater than the second preset temperature and corresponds to a third return air parameter compensation quantity, the first preset temperature is greater than the second preset temperature, and the first return air parameter compensation quantity, the second return air parameter compensation quantity and the third return air parameter compensation quantity are increased sequentially.

Optionally, in the preset step: if the outdoor ambient temperature is greater than a first preset temperature, the return air parameter compensation quantity corresponds to a first return air parameter compensation quantity; if the outdoor ambient temperature is greater than a second preset temperature and not greater than the first preset temperature, the return air parameter compensation quantity corresponds to a second return air parameter compensation quantity; and if the outdoor ambient temperature is not greater than the second preset temperature, the return air parameter compensation quantity corresponds to a third return air parameter compensation quantity, wherein the first preset temperature is greater than the second preset temperature, and the first return air parameter compensation quantity, the second return air parameter compensation quantity and the third return air parameter compensation quantity are increased sequentially.

The higher the outdoor ambient temperature, the greater the difference between the evaporator temperature and a saturation temperature corresponding to the actual collected pressure or the actual collected return air temperature due to the cold loss of pipelines, and the greater the corresponding compensation quantity. The saturation temperature corresponding to the corrected return air parameter can be closer to the evaporator temperature by designing the return air parameter compensation quantity, thereby improving the accuracy of freezing prevention determination, allowing the air conditioner to enter freezing prevention protection in time, and ensuring the operation reliability of the air conditioning system.

Optionally, the air conditioning system at least includes a compressor, an outdoor heat exchanger, a throttling element, an indoor heat exchanger and an outdoor fan which are sequentially connected to form a refrigerant circulating flow path.

Optionally, in the control step, the freezing prevention protection mode performs: controlling the compressor and the outdoor fan corresponding to the outdoor heat exchanger to stop operating, and the indoor heat exchanger to operate normally.

By the above method, in the freezing prevention protection mode, the outdoor fan stops operating and the release of heat in the outdoor heat exchanger can be reduced, allowing the refrigerant at an outlet of a condenser (outdoor heat exchanger) to enter an evaporator (indoor heat exchanger) at a relatively high temperature, so that the evaporator temperature is increased to alleviate the freezing condition of the evaporator. The normal operation of the evaporator can maintain the refrigeration indoors, and the absorption of indoor heat by the evaporator is helpful to further alleviate the freezing condition of the evaporator, increasing the heating rate of the evaporator and accelerating the melting of ice on the evaporator surface.

Optionally, the method includes a freezing prevention protection mode exit step, including:
comparing whether the corrected return air parameter is greater than a second return air parameter threshold, the second return air parameter threshold being greater than the first return air parameter threshold; and
if the corrected return air parameter is greater than the second return air parameter threshold, controlling the compressor and the outdoor fan to start.

When the corrected return air parameter is greater than the second return air parameter threshold, the evaporator is unlikely to freeze at the current temperature, and thus, the freezing prevention protection mode can be exited to ensure the normal operation of the refrigeration system and improve the user experience.

Optionally, the method includes a freezing prevention protection mode exit step, including: detecting the operation stop duration of the compressor after the compressor stops operating, and controlling the compressor to forcibly start and the outdoor fan to start after the operation stop duration exceeds a specified duration.

Under low-temperature conditions, the pressure/temperature of the refrigerant itself is low, and the pressure/temperature cannot be used as the only freezing prevention exit condition. By detecting the operation stop duration of the compressor, the compressor and the outdoor fan are re-started after the operation stop duration exceeds the specified duration, so that the normal operation of the air conditioning system is ensured, and the refrigeration requirement is met.

Optionally, the air conditioning system is a fixed-frequency air conditioning system; the air conditioning system includes a temperature sensor, for detecting a return air temperature between the indoor heat exchanger and a return air end of the compressor; and the first return air parameter threshold is a first return air temperature threshold, the second return air parameter threshold is a second return air temperature threshold, the first return air temperature threshold is -5°C to 5°C, and the second return air temperature threshold is 6°C to 15°C.

By the above method, the evaporation effect of the evaporator can be identified more accurately by detecting the return air temperature than by directly detecting the evaporator temperature, and the influence of the bias flow of the evaporator is also avoided, so that the accuracy is higher. In addition, the thermal expansion valve, the temperature-sensing package and the compressor are all arranged outdoors, without the need for communication between the indoor unit and the outdoor unit, thereby saving the cost of the communication line between the indoor unit and the outdoor unit; and for the fixed-frequency air conditioning system, the use of the temperature sensor to obtain the return air temperature can reduce the manufacturing cost of the fixed-frequency machine. Selecting an appropriate first temperature threshold range enables the evaporator to enter the freezing prevention protection mode in time in the low-temperature condition, thereby preventing the evaporator from being frozen and improving the freezing prevention performance of the air conditioning system. Selecting an appropriate second temperature threshold range enables the evaporator to exit the freezing prevention protection mode in time after the temperature is increased, thereby ensuring the normal operation of the air conditioning system and improving the user experience.

Optionally, the air conditioning system is a variable-frequency air conditioning system; the air conditioning system includes a pressure sensor, for detecting a return air pressure between the indoor heat exchanger and a return air end of the compressor; and the first return air parameter threshold is a first return air pressure threshold, the second return air parameter threshold is a second return air pressure threshold, the first return air parameter threshold is 0 .57MPa to 0 .83MPa, and the second return air parameter threshold is 0 .75MPa to 1 .15MPa.

The pressure sensor arranged on a pipeline between the indoor heat exchanger and the return air end of the compressor can identify the evaporation effect of the evaporator more accurately than by directly detecting the evaporator temperature, and the influence of the bias flow of the evaporator is also avoided, so that the accuracy is higher. In addition, the pressure sensor and the compressor are both arranged outdoors, without the need for the communication between the indoor unit and the outdoor unit, thereby saving the cost of the communication line between the indoor unit and the outdoor unit; and for the variable-frequency air conditioning system, the pressure sensor is a part of the system itself, so there is no additional cost. Selecting an appropriate first pressure threshold range enables the evaporator to enter the freezing prevention protection mode in time in the low-temperature condition, thereby preventing the evaporator from being frozen and improving the freezing prevention performance of the air conditioning system. Selecting an appropriate second pressure threshold range enables the evaporator to exit the freezing prevention protection mode in time after the temperature is increased, thereby ensuring the normal operation of the air conditioning system and improving the user experience.

According to a further aspect of the present invention, there is provided a device for controlling freezing prevention during refrigeration of an air conditioning system, including:
a preset module, configured to preset a return air parameter compensation quantity according to an outdoor ambient temperature;
a detection module, configured to detect a real-time return air parameter on a low-pressure side of the air conditioning system in a refrigeration mode;
a comparison module, configured to calculate a corrected return air parameter according to the sum of the real-time return air parameter and the corresponding return air parameter compensation quantity, and compare whether the corrected return air parameter is less than a first return air parameter threshold; and
a control module, configured to control the air conditioning system to enter a freezing prevention protection mode if the corrected return air parameter is less than the first return air parameter threshold.

According to a further aspect of the present invention, there is provided a computer-readable storage medium storing a computer program, which is configured to, when executed, implement the method for controlling freezing prevention during refrigeration of the air conditioning system as described above.

### BRIEF DESCRIPTION OF DRAWINGS

Certain exemplary embodiments will now be described in greater detail by way of example only and with reference to the accompanying drawings in which:
FIG. 1 is a schematic structural diagram of an air conditioning system;
FIG. 2 is a schematic flowchart of a method for controlling freezing prevention during refrigeration of the air conditioning system; and
FIG. 3 is a schematic structural diagram of the modular structure of a device for controlling freezing prevention during refrigeration of the air conditioning system.

Reference numerals: compressor 11; four-way valve 12; outdoor heat exchanger 13; first throttling element 14; liquid storage tank 15; second throttling element 16; thermal expansion valve 17; indoor heat exchanger 18; gas-liquid separator 19; temperature sensor 20; one-way valve 2; pressure sensor 3; low-pressure pressure switch 4; high-pressure pressure switch 5; preset module 61; detection module 62; comparison module 63; control module 64.

### DESCRIPTION OF THE EMBODIMENTS

The technical solutions in embodiments of the present invention are described clearly and completely below with reference to the accompanying drawings in embodiments of the present invention. The described embodiments are merely a part rather than all of the embodiments of the present invention. All other embodiments obtained by those of ordinary skill in the art based on the embodiments of the present invention without any creative efforts shall fall within the protection scope of the present invention.

### [First Embodiment]

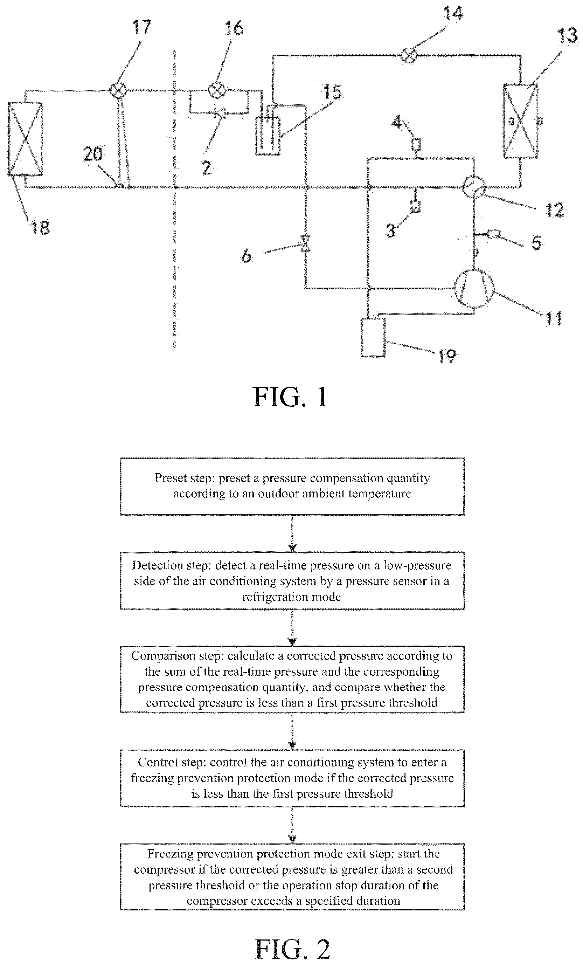

As shown in FIG. 1, a first embodiment of the present invention provides an air conditioning system, including: a compressor 11, a four-way valve 12, an outdoor heat exchanger 13, a first throttling element 14, a liquid storage tank 15, a second throttling element 16, a thermal expansion valve 17, an indoor heat exchanger 18 and a gas-liquid separator 19 which are sequentially connected to form a refrigerant circulating flow path; a one-way valve 2 is arranged in parallel across the second throttling element, and the one-way valve 2 controls a unidirectional flow of a refrigerant from the liquid storage tank 15 to the indoor heat exchanger 18; and a pressure sensor 3 is arranged on a pipeline between the indoor heat exchanger 18 and the four-way valve 12. The air conditioning system further includes: a low-pressure pressure switch 4, arranged between the four-way valve 12 and the gas-liquid separator 19; and a high-pressure pressure switch 5, arranged between the compressor 11 and the four-way valve 12. The compressor 11 is a variable-frequency compressor; the function of the liquid storage tank 15 is similar to that of the liquid-gas separator 19, gas generated by separation enters the compressor 11 through a branch pipeline to supplement the refrigerant quantity, a liquid refrigerant enters a main refrigerant path, and the pressure switch is used to monitor the pressure of the refrigerant in an air conditioning pipeline and provide feedback to an air conditioning controller (not shown in the figure); the thermal expansion valve 17 cooperates with the temperature sensor 20 to collect the temperature at the outlet of the indoor heat exchanger 18. When the refrigerant pressure is excessively low, the low-pressure pressure switch 4 is switched off, and the controller knows that the refrigerant quantity of the system is insufficient after receiving the signal and controls the compressor 11 not to work; and when the refrigerant pressure is excessively high, the high-pressure pressure switch 5 is switched off, and the controller controls the compressor 11 to stop working after receiving the signal, thereby preventing pipe explosion caused by the excessively high pressure. Preferably, the air conditioning system in this first embodiment is a variable-frequency air conditioning system.

Detecting the pressure of the low-pressure side by the pressure sensor 3 arranged on the pipeline between the indoor heat exchanger 18 and the four-way valve 12 can identify the evaporation effect of the evaporator more accurately than directly detecting the evaporator temperature, and the influence of the bias flow of the evaporator is also avoided, so that the accuracy is higher. In addition, the pressure sensor 3 and the compressor 11 are both arranged outdoors, without the need for the communication between the indoor unit and the outdoor unit, thereby saving the cost of the communication line between the indoor unit and the outdoor unit; and for the variable-frequency air conditioning system, the pressure sensor 3 is a part of the system itself, so there is no additional cost. It should be noted that although the first embodiment of the present invention shows the structure of the air conditioning system as described above, it should not constitute a limitation to the air conditioning system, and air conditioning systems with other structural forms are also applicable to the method for controlling freezing prevention during refrigeration provided in the first embodiment of the present invention.

As shown in FIG. 2, corresponding to the air conditioning system as described above, the present invention provides a method for controlling freezing prevention during refrigeration of an air conditioning system, including the following steps:
a preset step: presetting a pressure compensation quantity according to an outdoor ambient temperature;
a detection step: detecting a real-time pressure on a low-pressure side of the air conditioning system by a pressure sensor 3 in a refrigeration mode;
a comparison step: calculating a corrected pressure according to the sum of the real-time pressure and the corresponding pressure compensation quantity, and comparing whether the corrected pressure is less than a first pressure threshold; and
a control step: controlling the air conditioning system to enter a freezing prevention protection mode if the corrected pressure is less than the first pressure threshold.

The pressure compensation quantity is preset according to the outdoor ambient temperature, the corrected pressure is obtained according to the detected real-time pressure on the low-pressure side and the pressure compensation quantity, and whether to enter the freezing prevention protection mode is determined according to the comparison between the corrected pressure and the first pressure threshold, whereby when the corrected pressure is less than the first pressure threshold, the evaporator temperature is in a low state with a possibility of freezing, and entering the freezing prevention protection mode at this time can prevent the evaporator from being frozen in time. Furthermore, the pressure on a low-pressure side of the refrigeration system is collected, so that the frozen state of the evaporator can be identified more accurately, and interference by bias flow and the like is avoided. Moreover, the low-pressure side of the refrigeration system is located outdoors, and thus the start and stop of the compressor 11 can be controlled to achieve the freezing prevention protection without the need for the communication between the indoor unit and the outdoor unit, thereby saving the cost of the air conditioning system.

In a preferred embodiment of the present invention, in the control step, the freezing prevention protection mode performs: controlling the compressor 11 and the outdoor fan corresponding to the outdoor heat exchanger 13 to stop operating, and the indoor heat exchanger 18 to operate normally. In the freezing prevention protection mode, the outdoor fan stops operating and the release of heat in the outdoor heat exchanger 13 can be reduced, allowing the refrigerant at an outlet of a condenser (outdoor heat exchanger 13) to enter an evaporator (indoor heat exchanger 18) at a relatively high temperature, so that the evaporator temperature is increased to alleviate the freezing condition of the evaporator. The normal operation of the evaporator can maintain the refrigeration indoors, and the absorption of indoor heat by the evaporator is helpful to further alleviate the freezing condition of the evaporator, increasing the heating rate of the evaporator and accelerating the melting of ice on the evaporator surface.

In a preferred embodiment of the present invention, the method further includes a freezing prevention protection mode exit step: comparing whether the corrected pressure is greater than a second pressure threshold, where the second pressure threshold is greater than the first pressure threshold; and if the corrected pressure is greater than the second pressure threshold, controlling the compressor 11 and the outdoor fan (not shown in the figure) to start.

By the above method, when the corrected pressure is greater than the second pressure threshold, for example, the second pressure threshold being 0.86 MPa, and the corresponding saturation temperature being 6°C, the evaporator at this time is unlikely to freeze at this temperature, and thus the freezing prevention protection mode can be exited to ensure the normal operation of the refrigeration system and improve the user experience. In some embodiments, the freezing prevention protection mode exit step includes: detecting the operation stop duration of the compressor 11 after the compressor 11 stops operating, and controlling the compressor 11 to forcibly start and the outdoor fan to start after the operation stop duration exceeds a specified duration. Under low-temperature conditions, the pressure of the refrigerant itself is low, and the pressure cannot be used as the only freezing prevention exit condition (which may lead to the failure to exit the freezing prevention protection mode, thereby affecting the refrigeration effect of the air conditioner). By detecting the operation stop duration of the compressor 11, the compressor 11 and the outdoor fan are re-started after the operation stop duration exceeds the specified duration, so that the normal operation of the air conditioning system is ensured, and the refrigeration requirement is met.

In a preferred embodiment of the present invention, the first pressure threshold is 0.57 to 0.83 MPa. The second pressure threshold is 0.75 to 1.15 MPa. Selecting an appropriate first pressure threshold range enables the evaporator to enter the freezing prevention protection mode in time in the low-temperature condition, thereby preventing the evaporator from being frozen and improving the freezing prevention performance of the air conditioning system. Selecting an appropriate second pressure threshold range enables the evaporator to exit the freezing prevention protection mode in time after the temperature is increased, thereby ensuring the normal operation of the air conditioning system and improving the user experience. It should be noted that although the embodiment of the present invention shows the ranges of the pressure thresholds, it should not constitute a limitation to the pressure ranges, and technicians can adjust the ranges of the first pressure threshold and the second pressure threshold according to actual conditions.

The higher the outdoor ambient temperature, the greater the difference between the evaporator temperature and the saturation temperature corresponding to the actual collected pressure due to the cold loss of pipelines, and the greater the corresponding pressure compensation quantity. The saturation temperature corresponding to the corrected pressure can be closer to the evaporator temperature by designing the pressure compensation quantity, thereby improving the accuracy of freezing prevention determination, allowing the air conditioner to enter freezing prevention protection in time, and ensuring the operation reliability of the air conditioning system. In a preferred embodiment of the present invention, the outdoor ambient temperature is greater than a first preset temperature and corresponds to a first pressure compensation quantity; the outdoor ambient temperature is greater than a second preset temperature and not greater than the first preset temperature, and corresponds to a second pressure compensation quantity; and the outdoor ambient temperature is not greater than the second preset temperature and corresponds to a third pressure compensation quantity, the first preset temperature is greater than the second preset temperature, and the first pressure compensation quantity, the second pressure compensation quantity and the third pressure compensation quantity are increased sequentially. Specifically, if the outdoor ambient temperature is greater than 35°C, the first pressure compensation quantity is -0.06 MPa; if the outdoor ambient temperature is greater than 20°C and not greater than 35°C, the second pressure compensation quantity is -0.03 MPa; and if the outdoor ambient temperature is not greater than 20°C, the third pressure compensation quantity is 0 MPa. It should be noted that although the first embodiment of the present invention shows the specific numerical values of the above pressure compensation quantities, they can be adjusted by technicians according to the actual situation and are not limited to the examples in this embodiment; further, the pressure compensation quantity may also be a numerical range, for example, the range of the first pressure compensation quantity is (-0.2 to 0 MPa), the range of the second pressure compensation quantity is (-0.2 to 0 MPa), and the range of the third pressure compensation quantity is (-0.2 to 0 MPa); and the ranges of the first, second, and third pressure compensation quantities may be the same or different.

In this embodiment, through the experimental test, before the freezing prevention protection is approached, the difference between the evaporator pressure and the pressure on the low-pressure side of the outdoor unit is less than 0.02 MPa (matched with the pressure compensation quantity), the liquid pressure loss is small, and according to the real-time pressure on the low-pressure side of the outdoor unit and the pressure compensation quantity, the operation conditions of the indoor evaporator can be effectively reflected and the freezing prevention control of the evaporator can be accurately realized.

It should be noted that the method for controlling freezing prevention during refrigeration of this embodiment is also applicable to a fixed frequency air conditioning system and has a wide application range.

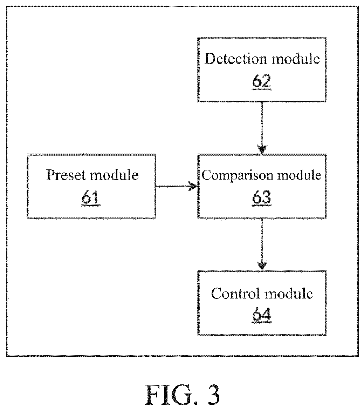

As shown in FIG. 3, the first embodiment of the present invention further provides a device for controlling freezing prevention during refrigeration of an air conditioning system, including:
a preset module 61, configured to preset a return air parameter compensation quantity according to an outdoor ambient temperature;
a detection module 62, configured to detect a real-time return air parameter on a low-pressure side of the air conditioning system in a refrigeration mode;
a comparison module 63: configured to calculate a corrected return air parameter according to the sum of the real-time return air parameter and the corresponding return air parameter compensation quantity, and compare whether the corrected return air parameter is less than a first return air parameter threshold; and
a control module 64, configured to control the air conditioning system to enter a freezing prevention protection mode if the corrected return air parameter is greater than the preset return air parameter threshold.

Specifically, the return air parameter is a return air pressure. The preset module 61, the comparison module 63 and the control module 64 are at least partially integrated in a controller of the air conditioning system. The controller may be an integrated circuit chip having a signal processing capability. The controller may be a general-purpose processor, including a central processing unit, or the controller may be a single-chip microcomputer, a microcontroller unit, a complex programmable logic device, a field programmable gate array, an application-specific integrated circuit, an embedded ARM and other chips. The controller can implement or perform each of the methods, steps and flow block diagrams disclosed in the embodiments of the present invention.

In a feasible embodiment, the air conditioning system may further include a memory (not shown in the figure) for storing program instructions executable by the controller, the program instructions being configured to, when executed, implement the method for controlling freezing prevention during refrigeration as described above. The memory may be an independent external memory, including but not limited to a random-access memory, a read-only memory, a programmable read-only memory, an erasable read-only memory and an electrically erasable read-only memory. The memory may also be integrated with the controller, for example, the memory may be integrated with the controller in the same chip.

In an embodiment of the present invention, the device further includes a temperature detection module configured to detect the outdoor ambient temperature. The temperature detection module may be arranged at the outdoor heat exchanger 13.

In the embodiment of the present invention, according to the device for controlling freezing prevention during refrigeration of the air conditioning system, the return air parameter compensation quantity is preset according to the outdoor ambient temperature, the corrected return air parameter is obtained according to the detected real-time return air parameter on the low-pressure side and the return air parameter compensation quantity, and whether to enter the freezing prevention protection mode is determined according to the comparison between the corrected return air parameter and the first return air parameter threshold, so that the evaporator can be prevented from being frozen in time. Furthermore, the return air parameter on a low-pressure side of the refrigeration system is collected, so that the frozen state of the evaporator can be identified more accurately, and interference by bias flow and the like is avoided. Moreover, the low-pressure side of the refrigeration system is located outdoors, and thus the start and stop of the compressor 11 can be controlled to achieve the freezing prevention protection without the need for the communication between the indoor unit and the outdoor unit, thereby saving the cost of the air conditioning system.

### [Second embodiment]

A second embodiment of the present invention provides an air conditioning system, having basically the same structure as the first embodiment. Preferably, in the second embodiment, the air conditioning system is a fixed-frequency air conditioner and a pressure sensor 3 is not included, thereby reducing the manufacturing cost.

The second embodiment of the present invention provides a method for controlling freezing prevention during refrigeration of an air conditioning system, including the following steps:
a preset step: presetting a return air temperature compensation quantity according to an outdoor ambient temperature;
a detection step: detecting a real-time return air temperature on a low-pressure side of the air conditioning system in a refrigeration mode;
a comparison step: calculating the corrected return air temperature according to the sum of the real-time return air temperature and the corresponding return air temperature compensation quantity, and comparing whether the corrected return air temperature is less than a first return air temperature threshold; and
a control step: controlling the air conditioning system to enter a freezing prevention protection mode if the corrected return air temperature is less than a first return air temperature threshold.

The return air temperature compensation quantity is preset according to the outdoor ambient temperature, the corrected return air temperature is obtained according to the detected real-time return air temperature on the low-pressure side and the return air temperature compensation quantity, and whether to enter the freezing prevention protection mode is determined according to the comparison between the corrected return air temperature and the first return air temperature threshold, whereby when the corrected return air temperature is less than the first return air temperature threshold, the evaporator temperature is in a low state with a possibility of freezing, and entering the freezing prevention protection mode at this time can prevent the evaporator from being frozen in time. Furthermore, the return air temperature on a low-pressure side of the refrigeration system is collected, so that the frozen state of the evaporator can be identified more accurately, and interference by bias flow and the like is avoided. Moreover, the low-pressure side of the refrigeration system is located outdoors, and thus the start and stop of the compressor 11 can be controlled to achieve the freezing prevention protection the without the need for the communication between the indoor unit and the outdoor unit, thereby saving the cost of the air conditioning system.

The higher the outdoor ambient temperature, the greater the difference between the evaporator temperature and the saturation temperature corresponding to the actual collected return air temperature due to the cold loss of pipelines, and the greater the corresponding return air temperature compensation quantity. The saturation temperature corresponding to the corrected return air temperature can be closer to the evaporator temperature by designing the return air temperature compensation quantity, thereby improving the accuracy of freezing prevention determination, allowing the air conditioner to enter freezing prevention protection in time, and ensuring the operation reliability of the air conditioning system. In a preferred embodiment of the present invention, in the preset step, the outdoor ambient temperature is greater than a first preset temperature and corresponds to a first return air temperature compensation quantity; the outdoor ambient temperature is greater than a second preset temperature and not greater than the first preset temperature, and corresponds to a second return air temperature compensation quantity; and the outdoor ambient temperature is not greater than the second preset temperature and corresponds to a third return air temperature compensation quantity, the first preset temperature is greater than the second preset temperature, and the first return air temperature compensation quantity, the second return air temperature compensation quantity and the third return air temperature compensation quantity are increased sequentially. Specifically, if the outdoor ambient temperature is greater than 35°C, the first return air temperature compensation quantity is -1°C; if the outdoor ambient temperature is greater than 20°C and not greater than 35°C, the second return air temperature compensation quantity is -0 .5°C; and if the outdoor ambient temperature is not greater than 20°C, the third return air temperature compensation quantity is 0°C. It should be noted that although the first embodiment of the present invention shows the specific numerical values of the above return air temperature compensation quantities, they can be adjusted by technicians according to the actual situation and are not limited to the examples in this embodiment; further, the return air temperature compensation quantity may also be a numerical range, for example, the range of the first return air temperature compensation quantity is (-2°C to 4°C), the range of the second return air temperature compensation quantity is (-2°C to 4°C), and the range of the third return air temperature compensation quantity is (-2°C to 4°C); and the ranges of the first, second, and third return air temperature compensation quantities may be the same or different.

In the embodiment of the present invention, according to the device for controlling freezing prevention during refrigeration of the air conditioning system, the return air temperature compensation quantity is preset according to the outdoor ambient temperature, the corrected return air temperature is obtained according to the detected real-time return air temperature on the low-pressure side and the return air temperature compensation quantity, and whether to enter the freezing prevention protection mode is determined according to the comparison between the corrected return air temperature and the first return air temperature threshold, so that the evaporator can be prevented from being frozen in time. Furthermore, the return air temperature on a low-pressure side of the refrigeration system is collected, so that the frozen state of the evaporator can be identified more accurately, and interference by bias flow and the like is avoided. Moreover, the low-pressure side of the refrigeration system is located outdoors and the temperature sensor 20 is located outdoors, and thus the start and stop of the compressor 11 can be controlled to achieve the freezing prevention protection without the communication between the indoor unit and the outdoor unit, thereby saving the cost of the air conditioning system.

In a preferred embodiment of the present invention, in the control step, the freezing prevention protection mode performs: controlling the compressor 11 and the outdoor fan corresponding to the outdoor heat exchanger 13 to stop operating, and the indoor heat exchanger 18 to operate normally. In the freezing prevention protection mode, the outdoor fan stops operating and the release of heat in the outdoor heat exchanger 13 can be reduced, allowing the refrigerant at an outlet of a condenser (outdoor heat exchanger 13) to enter an evaporator (indoor heat exchanger 18) at a relatively high temperature, so that the evaporator temperature is increased to alleviate the freezing condition of the evaporator. The normal operation of the evaporator can maintain the refrigeration indoors, and the absorption of indoor heat by the evaporator is helpful to further alleviate the freezing condition of the evaporator, increasing the heating rate of the evaporator and accelerating the melting of ice on the evaporator surface.

In a preferred embodiment of the present invention, the method further includes a freezing prevention protection mode exit step: comparing whether the corrected return air temperature is greater than a second return air temperature threshold, where the second return air temperature threshold is greater than the first return air temperature threshold; and if the corrected return air temperature is greater than the second return air temperature threshold, controlling the compressor 11 and the outdoor fan (not shown in the figure) to start.

By the above method, when the corrected return air temperature is greater than the second return air temperature threshold, for example, the second return air temperature threshold being 8°C, the evaporator at this time is unlikely to freeze at this temperature, and thus, the freezing prevention protection mode can be exited to ensure the normal operation of the refrigeration system and improve the user experience.

In some embodiments, the freezing prevention protection mode exit step includes: detecting the operation stop duration of the compressor 11 after the compressor 11 stops operating, and controlling the compressor 11 to forcibly start and the outdoor fan to start after the operation stop duration exceeds a specified duration. Under low-temperature conditions, the return air temperature of the refrigerant itself is low, and the return air temperature cannot be used as the only freezing prevention exit condition (which may lead to the failure to exit the freezing prevention protection mode, thereby affecting the refrigeration effect of the air conditioner). By detecting the operation stop duration of the compressor 11, the compressor 11 and the outdoor fan are re-started after the operation stop duration exceeds the specified duration, so that the normal operation of the air conditioning system is ensured, and the refrigeration requirement is met.

In a preferred embodiment of the present invention, the first return air temperature threshold is -5°C to 5°C, preferably 0°C. The second return air temperature threshold is 6°C to 15°C. Selecting an appropriate first return air temperature threshold range enables the evaporator to enter the freezing prevention protection mode in time in the low-temperature condition, thereby preventing the evaporator from being frozen and improving the freezing prevention performance of the air conditioning system. Selecting an appropriate second return air temperature threshold range enables the evaporator to exit the freezing prevention protection mode in time after the temperature is increased, thereby ensuring the normal operation of the air conditioning system and improving the user experience. It should be noted that although the embodiment of the present invention shows the ranges of the return air temperature thresholds, it should not constitute a limitation to the return air temperature ranges, and technicians can adjust the ranges of the first return temperature threshold and the second return air temperature threshold according to actual conditions.

The second embodiment of the present invention further provides a device for controlling freezing prevention during refrigeration of an air conditioning system, which is basically the same as the first embodiment and reference may be made to the description of the first embodiment, except that the above return air parameter is a return air temperature.

The second embodiment of the present invention further provides a computer-readable storage medium storing a computer program, which is configured to, when executed, implement the method for controlling freezing prevention during refrigeration of the air conditioning system as described above.

The above are merely preferred embodiments of the present invention, and are not used to limit the present invention. The scope of the invention is as set out in the appended claims.

## Claims

1. A method for controlling freezing prevention during refrigeration of an air conditioning system, comprising the following steps:
a preset step: presetting a return air parameter compensation quantity according to an outdoor ambient temperature;
a detection step: detecting a real-time return air parameter on a low-pressure side of the air conditioning system in a refrigeration mode;
a comparison step: calculating a corrected return air parameter according to the sum of the real-time return air parameter and the corresponding return air parameter compensation quantity, and comparing whether the corrected return air parameter is less than a first return air parameter threshold; and
a control step: controlling the air conditioning system to enter a freezing prevention protection mode if the corrected return air parameter is less than the first return air parameter threshold.

2. The method for controlling freezing prevention during refrigeration of an air conditioning system according to claim 1, wherein in the preset step, the outdoor ambient temperature is greater than a first preset temperature and corresponds to a first return air parameter compensation quantity; the outdoor ambient temperature is greater than a second preset temperature and not greater than the first preset temperature, and corresponds to a second return air parameter compensation quantity; and the outdoor ambient temperature is not greater than the second preset temperature and corresponds to a third return air parameter compensation quantity, the first preset temperature is greater than the second preset temperature, and the first return air parameter compensation quantity, the second return air parameter compensation quantity and the third return air parameter compensation quantity are increased sequentially.

3. The method for controlling freezing prevention during refrigeration of an air conditioning system according to claim 1 or 2, wherein the air conditioning system at least comprises a compressor (11), an outdoor heat exchanger (13), a throttling element (14), an indoor heat exchanger (18) and an outdoor fan which are sequentially connected to form a refrigerant circulating flow path.

4. The method for controlling freezing prevention during refrigeration of an air conditioning system according to claim 3, wherein in the control step, the freezing prevention protection mode performs: controlling the compressor (11) and the outdoor fan corresponding to the outdoor heat exchanger (13) to stop operating, and the indoor heat exchanger (18) to operate normally.

5. The method for controlling freezing prevention during refrigeration of an air conditioning system according to claim 3 or 4, further comprising a freezing prevention protection mode exit step:
comparing whether the corrected return air parameter is greater than a second return air parameter threshold, the second return air parameter threshold being greater than the first return air parameter threshold; and
if the corrected return air parameter is greater than the second return air parameter threshold, controlling the compressor (11) and the outdoor fan to start.

6. The method for controlling freezing prevention during refrigeration of an air conditioning system according to claim 3, 4 or 5, further comprising a freezing prevention protection mode exit step: detecting the operation stop duration of the compressor (11) after the compressor stops operating, and controlling the compressor to forcibly start and the outdoor fan to start after the operation stop duration exceeds a specified duration.

7. The method for controlling freezing prevention during refrigeration of an air conditioning system according to claim 5, wherein the air conditioning system is a fixed-frequency air conditioning system; the air conditioning system further comprises a temperature sensor (20) and a thermal expansion valve (17), for detecting a return air temperature between the indoor heat exchanger (18) and a return air end of the compressor (11); and the first return air parameter threshold is a first return air temperature threshold, the second return air parameter threshold is a second return air temperature threshold, the first return air temperature threshold is -5°C to 5°C, and the second return air temperature threshold is 6°C to 15°C.

8. The method for controlling freezing prevention during refrigeration of an air conditioning system according to claim 5, wherein the air conditioning system is a variable-frequency air conditioning system; the air conditioning system further comprises a pressure sensor (3), for detecting a return air pressure between the indoor heat exchanger (18) and a return air end of the compressor (11); and the first return air parameter threshold is a first return air pressure threshold, the second return air parameter threshold is a second return air pressure threshold, the first return air parameter threshold is 0.57 MPa to 0.83 MPa, and the second return air parameter threshold is 0.75 MPa to 1.15 MPa.

9. A device for controlling freezing prevention during refrigeration of an air conditioning system, comprising:
a preset module (61), configured to preset a return air parameter compensation quantity according to an outdoor ambient temperature;
a detection module (62), configured to detect a real-time return air parameter on a low-pressure side of the air conditioning system in a refrigeration mode;
a comparison module (63), configured to calculate a corrected return air parameter according to the sum of the real-time return air parameter and the corresponding return air parameter compensation quantity, and compare whether the corrected return air parameter is less than a first return air parameter threshold; and
a control module (64), configured to control the air conditioning system to enter a freezing prevention protection mode if the corrected return air parameter is less than the first return air parameter threshold.

10. A computer-readable storage medium, storing a computer program, which is configured to, when executed, implement the method for controlling freezing prevention during refrigeration of an air conditioning system according to any one of claims 1 to 8.
